(19) Europäisches Patentamt
European Patent Office
Office européen des brevets

(11) Veröffentlichungsnummer : **0 061 054**
**B1**

(12) # EUROPÄISCHE PATENTSCHRIFT

(45) Veröffentlichungstag der Patentschrift : **25.07.84**

(51) Int. Cl.³ : **C 08 F 36/18**, C 08 F 2/44

(21) Anmeldenummer : **82101804.1**

(22) Anmeldetag : **08.03.82**

(54) **Verfahren zur Polymerisation von Chloropren.**

(30) Priorität : **21.03.81 DE 3111138**

(43) Veröffentlichungstag der Anmeldung : **29.09.82 Patentblatt 82/39**

(45) Bekanntmachung des Hinweises auf die Patenterteilung : **25.07.84 Patentblatt 84/30**

(84) Benannte Vertragsstaaten : **BE DE FR GB IT NL**

(56) Entgegenhaltungen :
**FR-A- 2 076 922**
**FR-A- 2 266 707**

(73) Patentinhaber : **BAYER AG**
**Konzernverwaltung RP Patentabteilung**
**D-5090 Leverkusen 1 Bayerwerk (DE)**

(72) Erfinder : **Nolte, Wilfried, Dr.**
**Gronenborn C 33**
**D-5090 Leverkusen (DE)**
Erfinder : **Esser, Heinz, Dr.**
**Im Jungholzkamp 7**
**D-5093 Burscheid (DE)**

**EP 0 061 054 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft eine verbesserte Herstellung von Polychloroprenlatices, die durch Polymerisation bis zu hohem Umsatz — in der Regel über 50 % — hergestellt werden.

Besonders zur Herstellung feststoffreicher Polychloroprenlatices ist es erforderlich, die Polymerisation bis zu sehr hohen Umsätzen zu führen. Aus wirtschaftlichen Gründen kann es aber auch sinnvoll sein, hohe Umsätze bei niedriger konzentrierten Latices anzustreben.

Bei der Emulsionspolymerisation feststoffreicher Polychloroprenlatices müssen vor allem zwei Schwierigkeiten überwunden werden. Wird in der für einen ca. 35 %igen Latex üblichen Rezeptur der Wasseranteil so weit reduziert, daß ein ca. 60 %iger Latex resultieren müßte, so wird die Reaktionsgeschwindigkeit verringert — in aller Regel bleibt die Reaktion bei mäßigem Umsatz stehen — außerdem steigt die Viskosität des Reaktionsgemisches so stark an, daß ein einwandfreies Durchmischen mittels Rührer und ein einwandreies Abführen der Polymerisationswärme nicht zu erreichen ist. Deswegen ist es auch nicht möglich, die Polymerisation wie üblich bei 60 bis 70 % Umsatz abzubrechen. Der Wasseranteil im Reaktionsgemisch wäre zu gering; die Viskosität zu hoch. Deshalb wird bei der direkten Polymerisation feststoffreicher Latices der Umsatz in Abhängigkeit von der Erforderlichen Feststoffkonzentration auf über 85 % getrieben.

Bei der Chloropren-Polymerisation nimmt mit steigendem Umsatz die Zahl der Kettenverzweigung zu, so daß das Polymerisat von einem bestimmten umsatz an unlösliche Anteile enthält. Die Menge an Unlöslichem (Gel) und der Umsatz, bei dem das Unlösliche auftritt, hängen on Polymerisationstemperatur und von der Menge und Art des verwendeten Molekulargewichtreglers ab.

Für bestimmte Anwendungen, z. B. Klebstoffe, muß das Polymerisat gelfrei sein. Bei anderen Anwendungen ist dagegen ein hoher Gelanteil erwünscht. Aber auch bei diesen gelhaltigen Latices, die im allgemeinen bei höherer Temperatur und unter Verwendung geringer Reglermengen hergestellt werden, macht sich ein höherer Umsatz wegen der höheren Zahl an Verzweigungsstellen durch geringere Zugfestigkeit eines aus dem Latex gefertigten Films unangenehm bemerkbar.

Für die Vermeidung von Gel bei der Polymerisation bis zu hohen Umsätzen, wurden bereits Problemlösungen vorgeschlagen. So soll die Chloropren-Polymerisation in Gegenwart von 0,05-1,0 Gew.-% eines Polyetherketten enthaltenden tertiären Amins (DE-OS 25 14 666) oder 0,05-1,0 Gew.-% jeweils bezogen auf die Monomermenge, eines Polyethers (DE-OS 25 27 320) gelfreie Polymerisate ergeben, wenn bei 40 °C und Einsatz von ca. 0,28 Gew.-% Dodecylmercaptan als Regler bis 85 % Umsatz polymerisiert wird.

Diese vorgeschlagenen Methoden lassen sich auf den Fall der Polychloropen-Latices vom Geltyp nicht erfolgreich anwenden. Der Polyether wirkt außerdem noch als nichtionischer Emulgator und würde die colloidchemisch bedingten Eigenschaften des Latex unzulässig verändern.

Es wurde nun gefunden, daß der Zusatz eines Alkanolamins bei der Polymerisation von Chloropren zu einem Latex führt, der selbst bei Umsätzen von über 90 % noch Filme mit hervorragender Zugfestigkeit bildet.

Die Erfindung betrifft somit ein Verfahren zur Polymerisation von Chloropren, das bis zu 50 Gew.-% eines copolymerisierbaren Monomeren enthalten kann, in wäßrig alkalischer Emulsion, die Emulgatoren und andere übliche Hilfsmittel enthält, wobei die Polymerisation bis zu einem Umsatz über 80 % durchgeführt wird, das dadurch gekennzeichnet ist, daß man eine Emulsion verwendet, die 0,1 bis 2 Gew.-% eines primären oder sekundären Hydroxyalkylamins, bei dem die OH-Gruppe von Aminostickstoff durch wenigstens 2 C-Atome getrennt ist, enthält. Die Prozentangabe bezieht sich wie auch alle folgenden Gewichtsprozentangaben von Einsatzstoffen auf die Monomermenge.

Vorzugsweise werden 2-Hydroxyalkylamine eingesetzt, insbesondere solche der Formel

$$H-\underset{\displaystyle R_1}{N}-CH_2-\underset{\displaystyle R}{CH}-OH$$

wobei

R Wasserstoff oder $C_1$-$C_3$-Alkyl und

$R_1$ Wasserstoff, $C_1$-$C_5$-Alkyl oder $—CH_2—CHR—OH$ bedeuten,

und ganz besonders bevorzugt Diethanolamin.

Als Comonomere kommen z. B. 2,3-Dichlorbutadien, Vinylaromaten wie Styrol, (Meth)acrylnitril oder Butadien in Frage.

Um Feststoffgehalte von 50 bis 65 Gew.-% zu erreichen, muß der Polymerisationsansatz 55 bis 90 Gew.-% Wasser enthalten und die Polymerisation muß bis zu einem Umsatz über 90 % geführt werden. Die nicht umgesetzten Monomeren werden durch Strippen mit Wasserdampf oder durch Ausrühren im Vakuum aus dem Latex entfernt.

Die Polymerisation wird nach bekannten Verfahren wie Batch- oder Zulaufverfahren, bevorzugt jedoch kontinuierlich, als Emulsionspolymerisation durchgeführt. Die wäßrige Phase enthält bevorzugt 2,8 bis 3,8 vorzugsweise 3,2 bis 3,6 Gew.-% disproportionierte Abietinsäure, 0,3 bis 2,0, vorzugsweise 0,5 bis 0,7 Gew.-% Formaldehydkondensat der Naphthalinsulfonsäure und 0,25 bis 0,75, vorzugsweise 0,4 bis 0,6 Gew.-% eines Phosphats oder Polyphosphat sowie 0,3 bis 1,2 Gew.-% Alkalihydroxid, so daß am ende der

Polymerisation ein pH-Wert von etwa 11 bis 13 resultiert. Die mit den genannten Hilfsmitteln — Emulgatoren und Phosphat — eingebrachten Alkaliionen müssen zumindest teilweise aus Kalium bestehen. Ein Anteil von etwa 5 bis 20 mval pro 100 g Chloropren ist als ausreichend zu betrachten.

Geringe Mengen weiterer Emulgatoren anionischer oder nichtionischer Natur. können zusätzlich vorhanden sein.

Als Alkalihydroxid kann Natriumhydroxid bei geichzeitiger Verwendung von Kaliumsalzen der Emulgatoren und/oder der Phosphate eingesetzt werden. Vorzugsweise wird man jedoch mit den Natriumsalzen der Emulgatoren und Phosphaten arbeiten und Kaliumhydroxid zur Einstellung des pH-Wertes verwenden.

Als Phosphate können Alkalisalze der ortho-Phosphorsäure, der Diphosphorsäure oder der Hexametaphosphorsäure eingesetzt werden.

Die Polymerisation wird mit üblichen Initiatoren, vorzugsweise mit Formamidinsulfinsäure in Form einer 1,0 bis 2,5 gew.-%igen wäßrigen Lösung initiiert und aufrechterhalten. Die benötigte Menge ist abhängig von dem angewandten Polymerisationsverfahren und beträgt im allgemeinen 3,0 Gew.-% (kontinuierliches Verfahren) bis 10,0 Gew.-% (diskontinuierliches Verfahren) (berechnet auf 2,5 gew.-%ige Lösung).

Die Eigenschaften des Polymeren können druch Anwesenheit modifizierender mittel wie Alkylmercaptan, Schwefel oder Dialkylxanthogendisulfid bei der Polymerisation verändert, bzw. nach Wunsch eingestellt werden.

Die Herstellung der erfindungsgemäßen Polychloroprenlatices kann wie bei bekannter Emulsionspolymerisation chargenweise oder kontinuierlich erfolgen.

Es ist möglich, vollständig chargenweise zu arbeiten, wobei die Gesamtmenge des (der) Monomeren in der wäßrigen Emulgotorlösung emulgiert und die Polymerisation durch Zugabe des Initiators ausgelöst und aufrechterhalten wird. Die Zugabe des Initiators erfolgt absatzweise oder besser kontinuierlich.

Vor allem bei der Polymerisation großer Mengen ist es vorteilhaft, mit einem Teil des (der) Monomeren und der wäßrigen Emulgatorlösung die Polymerisation zu beginnen und den Rest des (der) Monomeren und der Emulgatorlösung sowie die Initiatorlösung im Maße des Fortschreitens der Reaktion zuzugeben.

Man polymerisiert bei 10 bis 60 °C, vorzugsweise von 30 bis 55 °C. Die üblichen Bedingungen der Emulsions-polymerisation wie Rühren zum Aufrechterhalten der Dispersion und Homogenisieren sowie vollständiger Ausschluß von Luftsauerstoff durch Verdrängen mit einem Inertgas wie Stickstoff werden eingehalten. Die Polymerisation wird bis zu Umsätzen über 80 % vorzugsweise bis zu 90-98 % geführt und dann durch Abkühlen oder Abstoppen mit einem Radikalfänger wie Diethylhydroxylamin oder durch sofortiges Entmonomerisieren z. B. durch Strippen mit Wasserdampf abgebrochen. Dieses Entmonomerisieren wird in jedem Fall durchgeführt. Ebenso wird man den fertigen Latex filtrieren, um auch kleinste Mengen von Ausscheidungen abzutrennen. Der Latex kann gegebenenfalls noch mit Alterungsschutzmitteln versetzt werden.

Die vorliegende Erfindung ist in besonderem Maße zur kontinuierlichen Herstellung von Polychloropren-Latex geeignet. Die kontinuierliche Herstellung bietet neben wirtschaftlichen auch technische Vorteile. Die Abführung der Polymerisationswärme ist bei der Reaktionsfreudigkeit des Chloroprens und seiner hohen Konzentration im Reaktionsgemisch besonders problematisch. Reaktoren in Form großer Rührkesse, wie sie bei batchweiser Polymerisation verwendent werden, weisen im allgemeinen ungünstige Oberflächen/Volumen-Verhältnisse auf, die für die Wärmeabfuhr unzureichend sind. Batchweise Polymerisation mit kontinuierlichem Zulauf des Reaktionsgemisches, angepaßt an die Wärmeabfuhr, ist möglich, aber wegen der unwirtschaftlichen Ausnutzung des Kesselvolumens und einer über den vollständigen Umsatz hinausgehende Verweilzeit für einen Teil der Latexteilchen nicht vorzuziehen. Bei kontinuierlicher Polymerisation in einer Rührkesselkaskade lassen sich diese Nachteile vermeiden oder zumindest stark vermindern. Die einzelnen Kessel in der Kaskade sind wesentlich kleiner als ein Kessel für batchweise Polymerisation, so daß die Wärme sicher abgeführt werden kann.

Zur Bestimmung der Zugfestigkeit wird eine Latexmischung aus einer Menge Latex, die 100 g Polymertrockensubstanz enthält, mit einer Dispersion aus 7,5 g Zinkoxid aktiv, 2,0 g Diphenylthioharnstoff und 1,0 g Diphenylguanidin in 18,5 g einer 5 gew.-%igen wäßrigen Lösung eines Formaldehydkondensats von naphthalinsulfonsaurem Natrium hergestellt. Aus dieser Latexmischung wird mit Hilfe der « Tonplattenmethode » (Auftrocknen auf einer Tonplatte bei Raumtemperatur) ein 1 mm starker Film hergestellt.

Die Messung der Zugfestigkeit erfolgt am verkleinerten Normstab 1 nach DIN 53 504. Die Zugfestigkeiten sollen mindestens 17,0 MPa betragen. Als gute Werte gelten Zugfestigkeiten über 18 MPa.

Der Defo-Wert wird nach DIN 53 514, die Shore-Härte nach DIN 53 505 bestimmt.

Andere Eigenschaften, wie HCl-Abspaltung und colloid-chemische Stabilität, werden durch die erfingungsgemäßen Maßnahmen nicht oder nur unwesentlich beeinflußt.

Beispiel 1

In ein Reaktionsgefäß, das mit Rührer, Ruckflußkühler, Tropftrichter, sowie Stickstoff ein- und

-auslaß ausgerüstet ist, werden eine Lösung aus 50,0 g Wasser, 5 g 70 gew.-%iger disprop. Abietinsäure, 0,65 g Formaldehydkondensat von Naphthalinsulfonsäure, 0,9 g Kaliumhydroxid, 0,5 g Natriumhexametaphosphat und 0,5 g Diethanolamin sowie 100 g Chloropren mit 0,05 g Dodecylmercaptan vorgelegt. Der Luftsauerstoff im Gefäß wird durch Stickstoff verdrängt und die Temperatur auf 45 °C erhöht.

2,5 gew.-%ige wäßrige Formamidinsulfinsäure-Lösung wird so zugetropft, daß eine gleichmäßige Polymerisation erfolgt. Nach 4,5 Stunden und einem Verbrauch von 10 g der Formamidinsulfinsäure-Lösung wird ein Umsatz von 95,5 % erreicht. Die Polymerisation wird durch Abkühlen abgebrochen. Es wird ein ausscheidungsfreier Latex mit einem pH-Wert von 13,0 erhalten. Das nicht umgesetzte Chloropren wird durch leichtes Abdestillieren im Vakuum entfernt. Der Feststoffgehalt beträgt 58,7 %.

Weitere Beispiele und Vergleichsbeispiele sind mit ihren anwendungstechnischen Resultaten in den Tabellen 1 und 2 aufgeführt. Die Durchführung der Versuche entsprach dem Beispiel 1.

(Siehe Tabellen Seite 5 ff.)

Tabelle 1

| Beispiel | 1 | 2 | 3 | 4 | 5 |
|---|---|---|---|---|---|
| Wasser | 50,0 | 50,0 | 50,0 | 50,0 | 50,0 |
| Disprop. Abietinsäure | 3,5 | 3,5 | 3,5 | 3,5 | 3,5 |
| Formaldehydk. von Naphthalins. | 0,65 | 0,65 | 0,65 | 0,65 | 0,65 |
| Kaliumhydroxid | 0,9 | 0,9 | 0,9 | 0,9 | -* |
| Natriumhexametaphosphat | 0,5 | 0,5 | 0,5 | 0,5 | 0,5 |
| Diethanolamin | 0,5 | 0,5 | 0,5 | 0,5 | 1,2 |
| Chloropren | 100,0 | 100,0 | 95,0 | 100,0 | 100,0 |
| 2,3-Dichlorbutadien | - | - | 5,0 | - | - |
| Dodecylmercaptan | 0,045 | 0,045 | 0,045 | 0,045 | 0,045 |
| Formamidinsulfinsäure, 2,5 %ig | 10,0 | 10,0 | 13,0 | 11,8 | 10,0 |
| Polymerisations-Temperatur (°C) | 45 | 40 | 35 | 30 | 45 |
| Polymerisations-Zeit (Stdn.) | 4,5 | 4,5 | 4,5 | 5,0 | 5,0 |
| Umsatz (%) | 95,5 | 98,0 | 96,5 | 96,4 | 96,9 |
| Feststoffgehalt (%) | 58,7 | 59,2 | 58,4 | 59,7 | 62,0 |
| Ausscheidungen | keine | keine | keine | keine | sehr gering |
| pH-Wert | 13,0 | 13,0 | 12,8 | 13,1 | 10,5** |
| Gelgehalt in Toluol (%) | 92 | 90 | 90 | 82 | 87 |
| Defo-Wert | 6250/46 | 6150/45 | 6000/47 | 5600/46 | 7000/49 |
| Shore-Härte bei -5°C (°Sh) | 44 | 44 | 45 | 37 | 45 |
| Festigkeit (MPa)*** | 21.9/20,8 | 27.2/21.9 | 26.2/22.5 | 23.8/24.2 | 20.0/20.7 |

* pH-Wert während der Polymerisation mit 20 %iger KOH auf größer 11 gehalten
** pH-Wert vor Weiterverarbeitung mit 20 %iger KOH auf 12.0 gestellt.
*** Werte nach 30/40 Min. Vulkanisation

Tabelle 2

| Beispiele | 6 | 7 | 8 (Vergl.) | 9 (Vergl.) | 10 (Vergl.) | 11 (Vergl.) |
|---|---|---|---|---|---|---|
| Wasser | 50,0 | 50,0 | 50,0 | 50,0 | 50,0 | 50,0 |
| Disprop. Abietinsäure | 3,5 | 3,5 | 3,5 | 3,5 | 3,5 | 3,5 |
| Formaldehyd von Naphthalinsäure | 0,65 | 0,65 | 0,65 | 0,65 | 0,65 | 0,65 |
| Kaliumhydroxid | 0,9 | 0,9 | 0,9 | 0,9 | 0,9 | 0,9 |
| Natriumhexymetaphosphat | 0,5 | 0,5 | 0,5 | 0,5 | 0,5 | 0,5* |
| Bis-(2-hydroxyethyl)oleylamin | - | - | - | 0,5 | - | - |
| Benzyl-phenylphenol mit 14 EO | - | - | - | - | 0,25 | - |
| iso-Nonylphenol mit 10 EO | - | - | - | - | - | 0,2 |
| Ethanolamin | 0,5 | - | - | - | - | - |
| 2-Methylaminoethanol | - | 0,5 | - | - | - | - |
| Chloropren | 100,0 | 100,0 | 100,0 | 100,0 | 100,0 | 100,0 |
| Dodecylmercaptan | 0,045 | 0,045 | 0,045 | 0,045 | 0,045 | 0,1 |
| Formamidinsulfinsäure, 2,5%ig | 8,0 | 8,0 | 10,0 | 10,0 | 10,0 | 21,0 |
| Polymerisations-Temperatur (°C) | 45 | 45 | 45 | 45 | 45 | 44 |
| Polymerisations-Zeit (Stdn.) | 3,0 | 3,0 | 4,0 | | | 3,5 |
| Umsatz (%) | 95,0 | 95,5 | 96,5 | keine Reaktion | keine Reaktion | 92,5 |
| Feststoffgehalt (%) | 59,9 | 60,1 | 59,9 | | | 53,1 |
| Ausscheidungen | keine | keine | keine | | | keine |

Tabelle 2 (Fortsetzung)

| Beispiele | 6 | 7 | 8 (Vergl.) | 9 (Vergl.) | 10 (Vergl.) | 11 (Vergl.) |
|---|---|---|---|---|---|---|
| pH-Wert | 13,1 | 13,1 | 12,9 | | | 12,3 |
| Gelgehalt in Toluol (%) | 87 | 90 | 93 | | | |
| Defo-Wert | 7800/52 | 7600/52 | 7050/47 | | | 2600/43 |
| Shore-Härte bei -5°C (°Sh) | 45 | 45 | 41 | | | 45 |
| Festigkeit (MPa)*** | 19,4/21,1 | 19,3/20,8 | 17,0/17,1 | | | 15,4/16,5 |

Pol. springt nur schwer an. Initait. Verbr. zu hoch

* Trinatriumphosphat

*** Werte nach 30/40 Minuten Vulkanisation

**Ansprüche**

1. Verfahren zur Polymerisation von Chloropren, das bis zu 50 Gew.-% copolymerisierbarer Monomerer enthalten kann, in wäßrig alkalischer Emulsion, die Emulgatoren und andere übliche Hilfsmittel enthält, wobei die Polymerisation bis zu einem Umsatz von über 80 % durchgeführt wird, dadurch gekennzeichnet, daß man eine Emulsion verwendet, die 0,1 bis 2 Gew.-%, bezogen auf Monomermenge, eines primären oder sekundären Hydroxyalkylamins bei dem die OH-Gruppe vom Aminostickstoff durch wenigstens 2 C-Atome getrennt ist, enthält.

2. Verfahren nach Anspruch 1, dadurch gekennzeichnet, daß als Comonomere 2,3-Dichlorbutadien, Styrol, (Meth)acrylnitril oder Butadien eingesetzt werden.

3. Verfahren nach Anspruch 1, dadurch gekennzeichnet, daß auf 100 Chloropren 5 bis 20 mval Kaliumionen im Reaktionsumsatz vorhanden sind.

4. Verfahren nach Anspruch 1, dadurch gekennzeichnet, daß ein 2-Hydroxyalkylamin eingesetzt wird.

5. Verfahren nach Anspruch 1, dadurch gekennzeichnet, daß ein Hydroxylalkylamin Formel

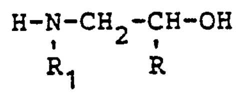

worin

R Wasserstoff oder $C_1$-$C_3$-Alkyl und

$R_1$ Wasserstoff, $C_1$-$C_5$-Alkyl oder —$CH_2$—CHR—CH bedeuten,

eingesetzt wird.

6. Verfahren nach Anspruch 1, dadurch gekennzeichnet, daß als Hydroxyalkylamin Diethanolamin eingesetzt wird.

**Claims**

1. Process for the polymerisation of chloroprene, which can contain up to 50 % by weight of copolymerisable monomers, in an aqueous alkaline emulsion containing emulsifiers and other conventional auxiliaries, polymerisation being carried out to a conversion of more than 80 %, characterised in that an emulsion is used which contains 0.1 to 2 % by weight, based on the quantity of monomers, of a primary or secondary hydroxyalkylamine in which the OH-group is separated from the amino nitrogen atom by at least two carbon atoms.

2. Process according to Claim 1, characterised in that 2,3-dichloro-butadiene, styrène, (meth)-acrylonitrile or butadiene are used as comonomers.

3. Process according to Claim 1, characterised in that 5 to 20 mvals of potassium ions are present in the reaction mixture per 100 g of chloroprene.

4. Process according to Claim 1, characterised in that a 2-hydroxyalkylamine is used.

5. Process according to Claim 1, characterised in that a hydroxyalkylamine of the formula

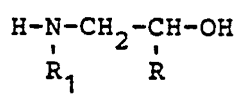

wherein

R represents hydrogen or $C_1$-$C_3$ alkyl and

$R_1$ represents hydrogen, $C_1$-$C_5$ alkyl or $CH_2$—CHR—OH,

is used.

6. Process according to Claim 1, characterised in that diethanolamine is used as the hydroxyalkylamine.

**Revendications**

1. Procédé pour la polymérisation du chloroprène qui peut contenir jusqu'à 50 % en poids de monomères copolymérisables, en émulsion alcaline aqueuse, qui contient des émulsionnants et d'autres agents auxiliaires habituels, la polymérisation étant mise en œuvre jusqu'à une conversion de plus de 80 %, caractérisé en ce que l'on utilise une émulsion qui contient 0,1 à 2 % en poids, par rapport à la quantité de monomères, d'une hydroxyalkylamine primaire ou secondaire dans laquelle le groupe OH est séparé de l'azote du groupe amino par au moins 2 atomes de carbone.

2. Procédé selon la revendication 1, caractérisé en ce que l'on utilise comme comonomères le 2,3-dichlorobutadiène, le styrène, le (méth)acrylonitrile ou le butadiène.

3. Procédé selon la revendication 1, caractérisé en ce qu'il y a 5 à 20 mval d'ions potassium dans la charge de réaction pour 100 g de chloroprène.

4. Procédé selon la revendication 1, caractérisé en ce que l'on utilise une 2-hydroxyalkylamine.

5. Procédé selon la revendication 1, caractérisé en ce que l'on utilise une hydroxyalkylamine de formule

$$H-\underset{R_1}{N}-CH_2-\underset{R}{CH}-OH$$

dans laquelle

R représente l'hydrogène ou un alkyle en $C_1$-$C_3$ et

$R_1$ représente l'hydrogène, un alkyle en $C_1$-$C_5$ ou $-CH_2-CHR-OH$.

6. Procédé selon la revendication 1, caractérisé en ce que l'on utilise comme hydroxyalkylamine la diéthanolamine.